# EUROPEAN PATENT APPLICATION

(11) **EP 3 623 747 A1**
(43) Date of publication of application: **18.03.2020**
(21) Application number: 18193696.4
(22) Date of filing: 11.09.2018
(51) Int. Cl.: G01B 5/016, G01B 21/04, B08B 5/02, B23Q 17/24

(54) **TOOL SETTING APPARATUS AND METHOD FOR A MACHINE TOOL**

(71) Applicant: Renishaw PLC, Wotton-under-Edge, Gloucestershire GL12 8JR (GB)
(72) Inventor: The designation of the inventor has not yet been filed
(74) Representative: Dunn, Paul Edward

(57) **Abstract**

A tool setting apparatus (40;200) for a machine tool (4) is described. The apparatus includes a measurement probe (44;206) having a stylus (46;208) and a deflection sensor for sensing deflection of the stylus. The distal end of the stylus (46) comprises a tool-contacting tip (47;212). A cover (48;214) is provided that has an aperture (53) through which the distal end of the stylus can pass. The cover (48;214) is moveable relative to the measurement probe (44;206) between a protective configuration in which the cover (48;214) substantially surrounds the stylus (46;208) and a tool measurement configuration in which the tip of the stylus (47;212) protrudes through the aperture (53) of the cover (48;214) to allow tool measurement. At least one gas supply pathway (56) is provided for supplying gas (e.g. air) into the region (58;231) enclosed by the cover (48;214) when the cover (48;214) is in the protective configuration, at least some of the supplied gas being expelled or bleed from the cover (48;214) through the aperture (53). The cover (48;214) may be moveable using an actuator (54), such as pneumatic actuator.

## Description

The present invention relates to a tool setting apparatus for a machine tool and in particular to such apparatus that includes a measurement probe with a retractable protective cover. A method of using such a tool setting apparatus is also outlined.

Machine tools are used in a wide variety of automated industrial manufacturing processes. It is known to use a tool setting apparatus in combination with such a machine tool to allow geometric information about the cutting tool, such as the length, radius, and/or diameter, to be measured. Tool setting apparatus of this type enables both initial tool measurement and in-process broken tool detection operations to be performed, thereby enabling the unmanned operation of machine tools.

The environment within a machine tool is typically very harsh. Swarf and particles of material are generated during the cutting process and a stream of coolant is typically sprayed on the workpiece. It is generally not practical to remove any tool setting apparatus after tool measurement but before cutting a workpiece, which means any tool setting apparatus must be robust enough to withstand being in the machine tool environment (e.g. bolted to the bed of the machine tool) during cutting operations.

It is known to provide tool setting apparatus comprising a measurement probe and a retractable, protective, cover. In particular, the TC76 tool setting device produced by Blum-Novotest GmbH, Germany includes such a retractable, protective, cover. During tool measurement, the cover is retracted thereby allowing a cutting tool to be brought into contact with a tool setting cube mounted to the distal end of a stylus tip of a measurement probe. During machining operations, the cover is extended to substantially surround and protect the stylus. The present inventors have, however, found that this type of arrangement does not always prevent the build-up of significant contamination on the stylus tip, even when the cover is extended. The present inventors have further recognised that there may also be ingress of contaminants during the cutting process that collects within the protective cover (e.g. coolant and/or cutting debris may enter the cover via a gap between the stylus tip and the aperture in the cover through which the stylus can protrude). The performance of such a device can be degraded by this contamination.

According to a first aspect of the present invention, there is provided a tool setting apparatus comprising;
a measurement probe having a stylus and a deflection sensor for sensing deflection of the stylus, the distal end of the stylus comprising a tool-contacting tip, and
a cover having an aperture through which the distal end of the stylus can pass, the cover being moveable relative to the measurement probe between a protective configuration in which the cover substantially surrounds the stylus and a tool measurement configuration in which the tool-contacting tip of the stylus protrudes through the aperture of the cover to allow tool measurement,
characterised in that at least one gas supply pathway is provided for supplying gas into the region enclosed by the cover when the cover is in the protective configuration, at least some of the supplied gas being expelled from the cover through the aperture.

The present invention thus provides an improved tool setting apparatus for a machine tool in which a measurement probe having a deflectable stylus is protected by a moveable (e.g. sliding) cover. The cover can be moved relative to the measurement probe into a protective configuration that surrounds and protects the stylus from any sprayed coolant or debris that is generated during a cutting operation and a tool measurement configuration in which the stylus protrudes sufficiently from the cover to allow tool measurement.

The present invention is characterised by at least one gas supply pathway being provided for supplying gas into the region enclosed by the cover when the cover is in the protective configuration, at least some of the supplied gas being expelled from the cover through the aperture. In other words, when the cover is in the protective configuration at least one gas supply pathway is provided that enables the supply of gas into the region enclosed by the cover (e.g. to allow the region enclosed by the cover to be held at a positive pressure relative to the ambient atmospheric pressure). The apparatus thus includes at least one gas supply pathway for carrying gas (e.g. compressed air) into the region or volume that is enclosed by the cover. Some, or all, of the gas supplied into the region enclosed by the cover is then expelled from the cover via the aperture. In other words, pressurised or compressed gas can be fed into the region enclosed by the cover via the at least one gas supply pathway and then expelled from the apparatus via the aperture that is provided in the cover. This flow of gas through the gas supply pathway and out of the aperture can be termed providing a gas (air) bleed. Providing this gas bleed capability when the apparatus is in the protective configuration acts to reduce the amount of contamination present on the tip of the stylus thereby reducing the degradation in tool measurement performance that might otherwise occur because of that contamination. The gas bleed capability also reduces the amount of debris that can enter the apparatus via the aperture in the cover, thereby also reducing the likelihood of internal components of the apparatus becoming worn or damaged during use.

Advantageously, the apparatus comprises at least one actuator for moving the cover between the protective configuration and the tool measurement configuration. For example, the at least one actuator may be used to extend and/or retract the cover. Conveniently, two or more actuators may be provided. For example, a first actuator may move the cover into the protective configuration and a second actuator may move the cover into the tool measurement configuration. The cover may also be moveable into other, e.g. intermediate, orientations (e.g. for maintenance purposes or the like). The at least one actuator is preferably controllable, directly or indirectly, by the numerical controller of an associated machine tool. In this manner, the tool setting apparatus may be automatically placed into the desired configuration (e.g. using an appropriate command in the G-code program that controls machine tool operation).

In addition to including at least one actuator, the apparatus may also include a spring or biasing means that biases the cover into one of the protective configuration and the tool measurement configuration. For example, the spring may bias the cover into the tool measurement configuration in the absence of any force being applied by the at least one actuator. Any type of spring may be provided. For example, the spring may comprise a coil spring.

The at least one actuator may be of any suitable type. For example, an electromagnetic or hydraulic actuator may be provided. Advantageously, the at least one actuator comprises at least one pneumatic actuator. Dual pneumatic actuation may be provided by two pneumatic actuators that impart opposed forces; e.g. supplying pressurised gas to a first actuator may urge the cover into the protective configuration and supplying pressurised gas to the second actuator may urge the cover into the tool measurement configuration. A pneumatic actuator that counters the biasing force provided by a spring may also be used.

The use of pneumatic actuators is convenient because the supply of gas that is used to activate the pneumatic actuator may also be fed to the at least one gas supply pathway (i.e. to provide the air bleed through the aperture of the cover). The gas carried into the region enclosed by the cover is thus advantageously received from a gas feed that also supplies the at least one pneumatic actuator. In this manner, the need for an extra gas supply line is avoided. Alternatively, a dedicated gas inlet (e.g. that can be fed with gas from a separate supply) may be provided for introducing gas into the at least one gas supply pathway. The gas introduced into the gas supply pathway is conveniently supplied at a flow rate of at least 0.25 litres per minute. The flow rate may be no more than 20 litres per minute.

In a preferred embodiment, there is provided a check valve (which could also be termed a one-way valve, a unidirectional valve or a non-return valve) in the at least one gas supply pathway. The check valve functions so as to allow gas to be passed along the gas supply pathway and into the region enclosed by the cover, but prevents gas flow in the opposite direction. The check valve thus ensures that there is no ingress of any pressurised gas (e.g. when the apparatus is not being used) into the gas supply pathway. It should be noted that the term check valve does not require a discrete, standalone, check valve component to be incorporated within the apparatus. The check valve may instead be provided by a check seal that is located between two components (e.g. between a first cylindrical body located within second cylindrical body) of the tool setting apparatus. In a preferred embodiment described below, the check valve is implemented using a wiper seal.

The apparatus of the present invention may be configured to expel gas from the aperture provided in the cover at a substantially constant flow rate. A pneumatic controller may also be provided (e.g. as part of a separate pneumatic interface) that allows the gas pressure and/or gas flow rate to be adjusted as required. The pneumatic controller may comprise a gas regulator. The pneumatic controller may also be used to adjust the flow rate and/or pressure during use of the apparatus. For example, periods of higher flow rate could be used to provide an enhanced stylus cleaning function whilst periods of lower flow rate could be used to conserve the gas supply. Advantageously, the check valve provides a pressure relief function thereby releasing an initial high-pressure burst of gas when a pressurised gas supply is received. In other words, a pressure build-up may occur behind the check valve until a pressure release event occurs that releases the gas so it can pass into the region enclosed by the cover. This arrangement can provide an initial gas (e.g. air) blast or burst (e.g. when moving the cover from the protective configuration to the tool measurement configuration) that helps clear any debris that has accumulated on the stylus, near the cover and/or on the tool that is to be measured.

The cover may be moveable between the tool measurement configuration and the protective configuration in a variety of ways. For example, a base may include the measurement probe. The base may be attachable (e.g. using bolts or the like) to a machine tool. The base may include appropriate electrical or pneumatic connectors. The cover may be slideably moveable relative to the base between a retracted position that provides the tool measurement configuration and an extended position that provides the protective configuration. Channels or guides within the base may co-operate with the cover to provide the sliding motion. In this arrangement, the above-mentioned check seal forming the check valve may be provided between the base (e.g. the outermost housing of the measurement probe) and the cover. At least some of the channels or guides within the base may form part of the at least one gas supply pathway.

The cover may take any desired shape. It is preferred that the external surface of the cover is rounded to avoid any sharp edges or recesses in which contamination might accumulate or to which swarf might become attached. Advantageously, the cover comprises a cylindrical portion. The cylindrical portion conveniently comprises a conical nose cone at its distal end. The aperture in the cover may be provided at the apex of the nose cone. One or more additional apertures may be provided in the nose cone, for example a series of apertures circumferentially spaced apart from one another. These additional apertures may allow coolant to drain from within the cover, if necessary. It should be noted that the apparatus may also include one or more discrete gas blast nozzles (e.g. extending on a stem) for cleaning the tool prior to measurement.

As explained above, the tool-contacting tip of the stylus preferably comprises a tool-contacting feature. For example, the tool-contacting feature may comprise at least one of a cube, a ball or a disk etc. The aperture is conveniently dimensioned to allow the tool-contacting feature to pass therethrough. In other words, the aperture is slightly larger than the cross-section of the tool-contacting feature to allow it to pass back and forth through the aperture. The shape of the aperture may also be configured to match the cross-sectional shape of the tool-contacting feature. For example, if the tool-contacting feature is a cube the aperture preferably has a square cross-section that is slightly larger than the cross-section of the cube. Advantageous, the tool-contacting feature is located within the aperture when the apparatus is in the protective configuration. In other words, the tool-contacting feature preferably blocks most of the aperture when in the protective configuration. At least some of the gas supplied to the region within the cover is thus expelled from the cover via a gap between the tool-contacting feature and the periphery of the cover that defines the aperture. As explained above, the gas flow through the gap helps to keep the stylus clean and also reduces the ingress of contamination. The gas may simply be expelled from the cover in an axial direction (i.e. in a direction substantially parallel to the axis of the elongate stylus). Alternatively, one or more gas deflectors may be provided (e.g. as part of the cover) to deflect or steer the gas over one or more desired regions of the tool-contacting feature. For example, at least part of the flow of gas may be directed over the end face (i.e. the face of the cube visible in the aperture) of a tool-contacting cube.

Preferably, although not essentially, gas is only supplied to the region or volume within the cover when the apparatus is in the protective configuration. In other words, the apparatus is preferably configured such that no gas is expelled via the aperture when the apparatus is in the tool measurement configuration. This provides the required protection against contamination in the protective configuration and means there is no flow of gas, which might blow debris around within the machine tool or impart a deflection force on the stylus, when measurements are being taken using the tool measurement configuration. The at least one gas pathway may thus become closed or sealed-off when the apparatus is not in the protective configuration to prevent the supply of gas to the region within the cover. Alternatively, the at least one gas pathway may remain open at all times, but the supply of gas thereto may be stopped when the apparatus is in the tool measurement configuration.

It should be noted that the relative motion between the cover and measurement probe that is described above may be provided by moving one or both of the cover and the measurement probe. Although the specific embodiments described herein show a cover that is moved relative to a measurement probe that is held stationary, it would also be possible for the measurement probe to be moved relative to a stationary cover. Any mentioned herein of moving the cover into different configurations are thus intended, unless specifically stated to the contrary, to include any relative movement between the cover and measurement probe (i.e. movement of the cover and/or measurement probe).

The present invention also extends to a machine tool incorporating the above described tool setting apparatus. The machine tool may have a controller (e.g. a numerical controller or NC). The controller may be interfaced to the tool setting apparatus via one or more control lines (e.g. electrical and/or pneumatic control lines). The controller may be configured to switch the tool setting apparatus into the protective configuration or the tool measurement configuration via the one or more control lines. In other words, electrical control signals and/or pneumatic activation may be used to switch the tool setting apparatus between its different configurations. In this manner, automated tool measurements may be performed. For example, the computer program running on the controller (e.g. a series of G-code instructions) may include commands that can cause the tool setting apparatus to enter the desired configuration.

According to a second aspect of the present invention, there is provided a method of operating a tool setting apparatus comprising a measurement probe and a cover, the measurement probe having a stylus and a deflection sensor for sensing deflection of the stylus, the distal end of the stylus comprising a tool-contacting tip, and the cover having an aperture through which the distal end of the stylus can pass, the cover being moveable relative to the measurement probe between a protective configuration in which the cover substantially surrounds the stylus and a tool measurement configuration in which the tip of the stylus protrudes through the aperture of the cover to allow tool measurement, characterised by the step of supplying gas into the region enclosed by the cover when the apparatus is in the protective configuration such that gas is expelled from the cover via the aperture. The method may include any of the features described above in the context of the corresponding apparatus.

Also described herein is a tool setting apparatus comprising a tactile measurement probe. The apparatus may also include a protective cover (e.g. for protecting the tactile measurement probe). The tactile measurement probe may include a stylus. The distal end of the stylus may comprise a tool-contacting tip. The tactile measurement probe may include a deflection sensor for sensing deflection of the stylus. The protective cover may include an aperture through which at least a part of the measurement probe (e.g. the distal end of the stylus) can pass. The cover may be moveable between a plurality of different configurations. One configuration may be a protective configuration in which the cover substantially surrounds the stylus. In this protective configuration, the stylus may occlude part of the aperture (with gas being expelled through the gap between the stylus and the periphery of the cover that defines the aperture). One configuration may be a tool measurement configuration in which the tip of the stylus protrudes through the aperture of the cover to allow tool measurement. The apparatus may include means for supplying a flow of gas (e.g. air) into to the volume (region) contained within the cover. Such gas may exit the cover via the aperture. The gas may be introduced into the volume enclosed by the cover via at least one gas supply pathway. Gas may be supplied to the region within the cover when the apparatus is in the protective configuration.

The invention will now be described, by way of example only, with reference to the accompanying drawings in which;
Figure 1 illustrates a machine tool comprising a tool setting apparatus;
Figures 2A and 2B is a schematic illustration of tool setting apparatus of the present invention in the protective (extended) and measurement (retracted) configurations;
Figure 3A and 3B show in more detail a dual-pneumatic supply tool setting apparatus of the present invention; and
Figure 4A and 4B show in more detail a spring-return tool setting apparatus of the present invention.

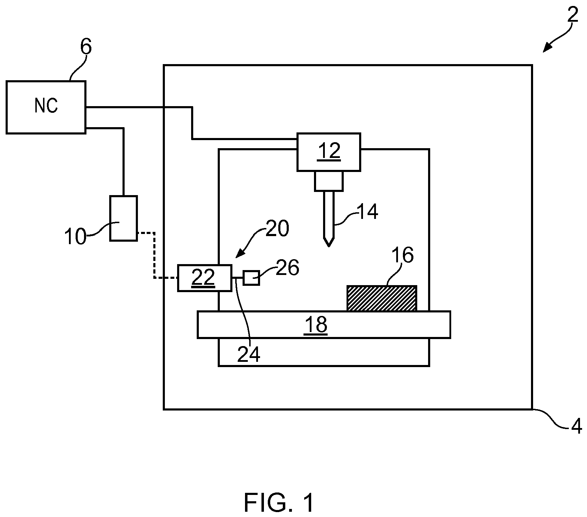

Referring to Figure 1, there is shown a machine tool apparatus 2 comprising a machine tool 4, which may be a machining centre, and a numerical controller (NC) 6. The machine tool 4 comprises motors (not shown) for moving a spindle 12 which can hold a variety of cutting tools. For example, as shown, the spindle 12 can hold a cutting tool 14 comprising a fluted drill bit. The motors can be used to move the spindle 12 relative to a workpiece 16 located on a table 18. The location of the spindle 12 (and hence the cutting tool 14) is accurately measured in a known manner using encoders (not shown) or the like; such measurements providing spindle position data defined in the so-called machine co-ordinate system (x, y, z). The numerical controller (NC) 6 controls (x, y, z) movement of the spindle 12 within the work area of the machine tool and also receives data relating to the spindle position. In this manner, the NC 6 can accurately move the cutting tool 14 along a pre-programmed cutting path that cuts the desired features into the workpiece 16.

The position of the relevant cutting feature(s) of the cutting tool 14 in the machine co-ordinate system are measured using a contact tool setter 20. For example, the length of the cutting tool 14 may be measured. In this example, the tool setter 20 is horizontally mounted to the machine tool enclosure but it could be mounted on other parts of the machine tool, e.g. any part of the machine which the spindle can access. In general, the tool setter 20 comprises a housing 22 from which protrudes a stylus 24 having a work-piece contacting stylus cube 26 at its distal end. In use, the machine tool brings the tip of the cutting tool 14 into contact with the tool contacting cube 26. The tool setter 20 includes a deflection sensor that monitors for any deflection of the stylus 24 relative to the body of the tool setter. If deflection is sensed, the tool setter 20 issues a so-called trigger signal. The trigger signal is routed by a wired connection to a receiver interface 10 that passes the trigger signal to the NC 6. On receipt of the trigger signal, the NC causes the machine tool to stop and also record its encoder positions (i.e. it freezes its scales). The NC 6 can then calculate the required dimension (e.g. length) of the cutting tool 14 (e.g. relative to other tools that go through the same process).

As will be understood, the above is just one example of machine tool apparatus. In alternative embodiments, relative movement in any or all of the x, y and z dimensions could be provided by movement of the table 18 relative to the spindle 12. Furthermore, relative rotational movement of the cutting tool 14 and workpiece 16 could be provided by a part of the spindle 12 (e.g. a rotating/articulated head mounted on the spindle 12) and/or a part of table 18 (e.g. a rotary table). Furthermore, movement might be restricted to fewer dimensions, e.g. only x, and/or y. Further still, the embodiment described comprises a Cartesian machine tool, whereas it will be understood this need not necessarily be the case and could be for instance a non-Cartesian machine tool. Further still, many other different types of machine tools, including lathes, and parallel-kinematic machines, and robot arms are known and on which the tool setter of the invention could be used.

It would be understood by those skilled in the art that the machine tool environment can be extremely harsh. Metal workpieces can be subjected to very large cutting force and swarf, chips and abrasive coolant are often present in the machining environment. It is therefore known to protect a contact tool setter when it is not being used for measurement (i.e. when the machine tool is instead being used for a cutting operation). In particular, the TC76 tool setting device produced by Blum-Novotest GmbH, Germany includes a retractable, protective, cover. During tool measurement, the cover is retracted thereby allowing a cutting tool to be brought into contact with the tool setting stylus but during machining operations the cover is extended to substantially surround and protect the stylus. Although this type of arrangement prevents swarf from wrapping around the stylus etc, the present inventors have found that coolant and metal particles etc (contaminants) can still attach to the stylus and/or collect within the cover. This can reduce measurement accuracy and/or cause damage to the sliding retraction mechanism.

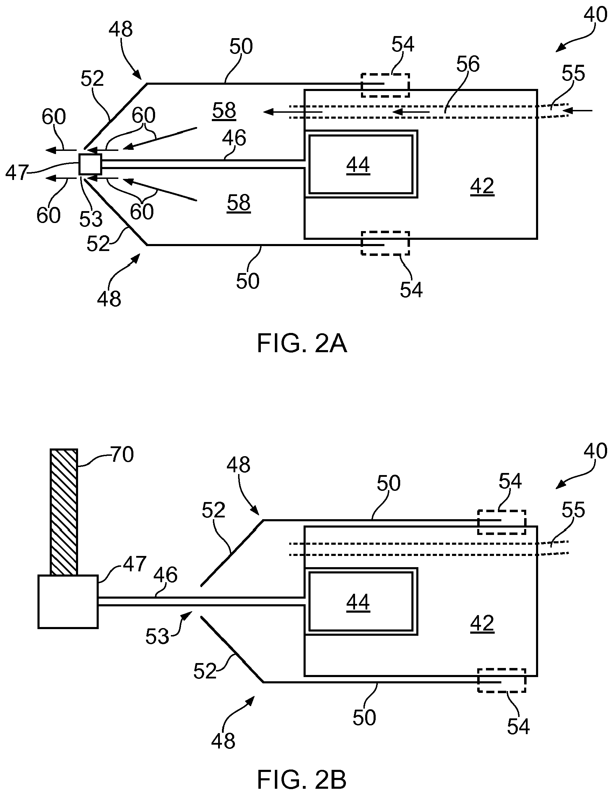

Referring to figures 2A and 2B, tool setting apparatus of the present invention is illustrated in an extended (protective) configuration and a retracted (measurement) configuration.

Figure 2A shows tool setting apparatus 40 comprising a base 42 that includes a conventional touch trigger measurement probe 44. A stylus 46 having a tool setting cube 47 at its distal end is attached to the measurement probe 44. The stylus 46 is deflectable relative to the body of the measurement probe 44 and the measurement probe 44 includes one or more sensors (not shown) for measuring stylus deflection. A sliding cover 48 is provided to protect the stylus 46 of the measurement probe 44. The cover 48 has a cylindrical section 50 and a conical nose cone 52. At the apex of the nose cone 52 there is provided an aperture 53 that is appropriately dimensioned to allow the stylus 46 (in particular the tool setting cube 47) to pass through it. The apparatus 40 also includes an actuation mechanism 54 for moving the cover 48 between the extended position shown in figure 2A and the retracted position that will be described below with reference to figure 2B.

The tool setting apparatus 40 also comprises a gas inlet 55 and a gas pathway 56 that runs from the gas inlet 55 to within the volume 58 defined by the cover 48. The gas inlet 55 and gas supply pathway 56 enable a supply of pressurised gas (e.g. compressed air from an air compressor) to be injected into the space (i.e. volume 58) within the cover 48. As shown by the arrows 60, this pressurised gas is expelled (i.e. bleeds) from the cover 48 via the small gap that is present between the tool setting cube 47 and the surrounding part of the nose cone 52. This continual expulsion of gas reduces the amount of contamination (coolant, material chips etc) that attaches to the stylus 46, particularly the tool setting cube 47, thereby preventing degradation of tool measurement performance. This expulsion of gas also reduces the amount of contamination that enters the cover 48, thereby better protecting the internal components of the apparatus.

Figure 2B shows the apparatus in the retracted (tool measurement) configuration. As can be seen, the cover 48 is in the retrated position and the stylus thereby protrudes from the apparatus. In this tool measurement configuration, there is no need to supply gas via the gas inlet 55 because the machine tool has stopped cutting operations. A cutting tool 70 can be brought into contact with the tool setting cube 47 of the stylus 46, allowing the required tool dimensions (e.g. length, width etc) to be measured. In other words, standard tool measurement may be acquired. Although gas could still be supplied in the tool measurement configuration, this is not necessary.

It is important to note that figures 2A and 2B schematically illustrate a very simple gas supply pathway. The gas inlet and gas pathway may simply be a conduit or pipe as shown in figures 2A and 2B. Alternatively, the gas supply pathway may pass through various channels, conduits and/or gaps etc within the various internal components of the apparatus. In some embodiments, the gas supply pathway may only be open when the apparatus is in the protective (extended) configuration. In other words, the gas supply pathway may be blocked or closed when the apparatus is in the tool measurement configuration.

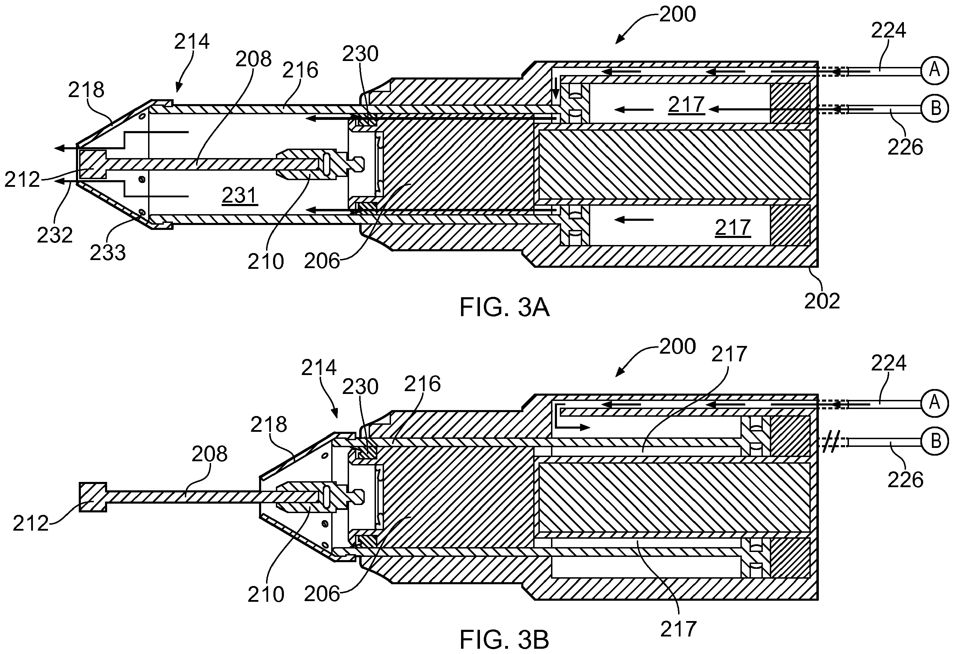

Referring next to figures 3A and 3B, a tool setting apparatus of the present invention is shown that includes a dual air actuation mechanism in an extended (protective) configuration and a retracted (tool measurement) configuration.

Figure 3A shows the tool setting apparatus 200 that comprises a base 202 that can be attached to a machine tool (not shown). The apparatus 200 includes a measurement probe 206, which in the present example is a MP250 touch trigger probe sold by Renishaw plc, Wotton-Under-Edge, Gloucestershire, UK. A tool setting stylus 208 is attached to the measurement probe 206 by a screw thread attachment mechanism 210 in a conventional manner. The distal end of the stylus 208 carries a tool setting cube 212. A cover 214 is provided that can slide back and forth in a channel 217 formed in the base 202. The cover 214 has a cylindrical section 216 and terminates in a conical nose cone 218. An aperture formed in the apex of the conical nose cone 218 is dimensioned to allow the stylus 208 (in particular the tool setting cube 212) to pass therethrough.

A pair of pneumatic connectors (not shown) are connected to first and second pneumatic supply lines 224 and 226. The first pneumatic supply line 224 (channel A) is used to provide the air bleed function and to retract the cover 214, whilst the second pneumatic supply line 226 (channel B) is used to extend the cover 214. In the protective configuration shown in figure 3A, compressed air is supplied to the tool setting apparatus via both the first and second pneumatic supply lines 224 and 226. The air supplied to the second pneumatic supply line 226 fills the piston-like cavity 217 thereby forcing the cover 214 into the extended position. The apparatus is arranged so that air supplied by the first pneumatic supply line 224 enters the space surrounding the exterior casing of the measurement probe 206. A circumferential wiper seal 230 is provided between the exterior of the measurement probe 206 and the inside (moveable) surface of the cover 214. The pressurised air introduced by the first pneumatic supply line 224 increases the air pressure applied to the wiper seal 230 until the air-tight seal with the inside of the cover 214 that is initially provided by the wiper seal 230 is overcome. The wiper seal 230 is thus an example of a check seal that forms a check valve within the apparatus. This causes air to enter the protective cavity 231 (i.e. defined by the inside of the cover 214), which then passes (bleeds) out of the gap 232 between the tool setting cube 212 and the cover 214. This air flow removes (i.e. ejects) any debris from the gap 232 and this flow of air into and out of the cavity is preferably maintained whenever the machine tool is performing a cutting operation to keep the tool setting cube as clean as possible and to reduce the ingress of contamination into the cover. A series of coolant drain holes 233 are also provided around the periphery of the conical end cone 218 to allow any coolant that does enter the cover 214 to drain out.

Figure 3B illustrates the cover 214 when retracted. Retracting the cover is achieved by switching off the compressed air that is supplied via the second pneumatic supply line 226 (i.e. channel B). The piston-like cavity 217 is thereby no longer pressurised which means the air pressure provided by the first pneumatic supply line 224 forces the cover into the retracted position illustrated in figure 3B. In this configuration, the wiper seal 230 provides a fluid-tight seal against the internal edge of the cylindrical section 216 of the cover 214 and thus performs the function of preventing air, contaminants etc from entering the inside of the apparatus. In this configuration, the apparatus can be used for tool measurement.

Although not shown, the supply of air provided by the pneumatic control lines 224 and 226 can be controlled by the NC of the associated machine tool. In particular, electronically controlled valves may be provided as part of a pneumatic interface (that may be separate to the tool setter interface) that allows the NC to switch on and off the compressed air supply to the pneumatic control lines 224 and 226. In this manner, the NC can switch the tool setting apparatus between the protective (extended) configuration and tool measurement (retracted) configuration as and when required. The pneumatic interface may optionally include flow and/or pressure regulators or the like to control the flow rate and/or pressure of supplied gas. This may allow the user to alter the flow rate of gas for different scenarios. For example, the flow rate of gas supplied via the first pneumatic supply line 224 may be increased during periods where an increased rate of air bleed is required (e.g. to clean the stylus or when high pressure coolant sprays are in use) and reduced at other times (e.g. to reduce air consumption).

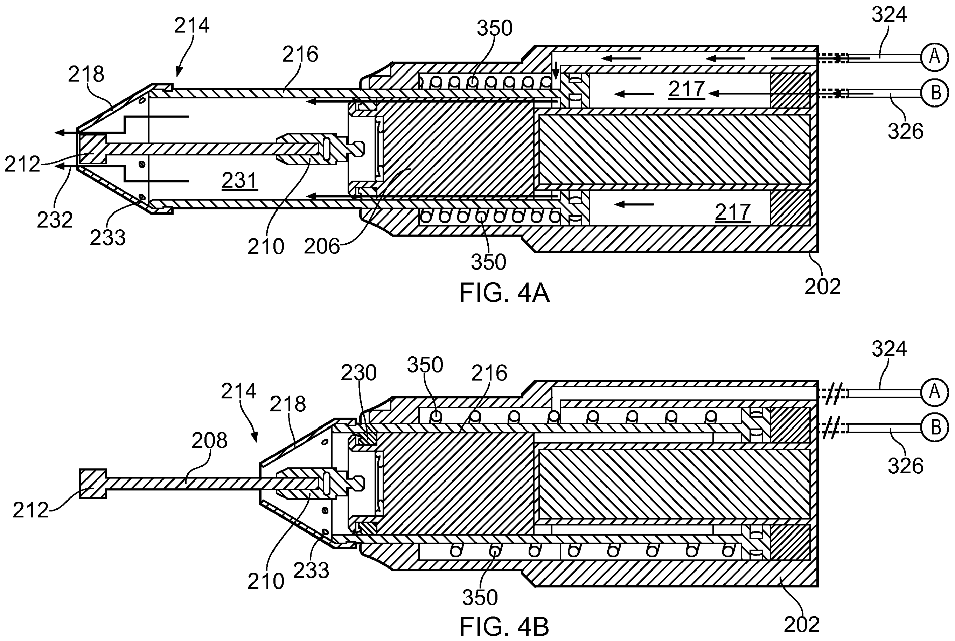

Referring next to figures 4A and 4B, a tool setting apparatus of the present invention is shown that includes a single channel air actuation mechanism in combination with a return spring. The apparatus is illustrated in figures 4A and 4B in the extended (protective) and a retracted (measurement) configurations respectively. It can be seen that the apparatus of figures 4A and 4B has many similarities to that of figures 3A and 3B and like reference numerals are thus used herein to denote similar features.

Figure 4A shows a similar arrangement to figure 3A, except that the air supply is only required when the cover 214 is extended. The first pneumatic supply line 324 (channel A) is used to provide the air bleed function whilst the second pneumatic supply line 326 (channel B) is used to extend the cover 214. In addition to the pneumatic arrangement, a return spring 350 (in this example a coil spring) is also provided that provides a biasing force between the cover 214 and the base 202. In the extended configuration of figure 4A, the return spring 350 is compressed by the force applied by the presence of pressurised air (i.e. supplied via the second pneumatic supply line 326) in the piston-like cavity 217 that forces the cover 214 into the extended position. This arrangement allows the cover extension function to be controlled separately to the air bleed function. This allows more control over the flow rate used for the air bleed (e.g. it could be reduced or increased as desired) without affecting the air supply used for the separate cover extension function. The cover could also be extended without any air bleed (e.g. for backward compatibility purposes).

Figure 4B shows the cover 214 when retracted. In this embodiment, retraction of the cover is attained by simply turning off the supply of compressed air. The piston-like cavity 217 is thereby no longer pressurised and the spring force applied by the return spring 350 causes the cover 214 to adopt the illustrated retracted (tool measurement) configuration. It should be noted that the majority of the hardware is identical for the pneumatic and spring return embodiments, meaning there are minimal additional production costs associated with producing the two variants.

The above embodiments are merely example of how tool setting apparatus of the present invention could be constructed and operated. For example, the use of compressed air is described but any pressurised gas (e.g. a nitrogen gas supply etc) could be used as an alternative. It would also be possible to move the measurement probe and keep the cover stationary to provide the different configurations. The skilled person would also recognise the various modifications and alterations that would be possible to achieve the same result.

## Claims

1. A tool setting apparatus comprising;
a measurement probe having a stylus and a deflection sensor for sensing deflection of the stylus, the distal end of the stylus comprising a tool-contacting tip, and
a cover having an aperture through which the distal end of the stylus can pass, the cover being moveable relative to the measurement probe between a protective configuration in which the cover substantially surrounds the stylus and a tool measurement configuration in which the tool-contacting tip of the stylus protrudes through the aperture of the cover to allow tool measurement,
**characterised in that** at least one gas supply pathway is provided for supplying gas into the region enclosed by the cover when the cover is in the protective configuration, at least some of the supplied gas being expelled from the cover through the aperture.

2. A tool setting apparatus according to any preceding claim, comprising at least one actuator for moving the cover between the protective configuration and the tool measurement configuration.

3. A tool setting apparatus according to claim 2, comprising at least one spring for biasing the cover into one of the protective configuration and the tool measurement configuration.

4. A tool setting apparatus according to any one of claims 2 to 3, wherein the at least one actuator comprises at least one pneumatic actuator.

5. A tool setting apparatus according to claim 4, wherein the gas carried into the region enclosed by the cover is received from a gas feed that also supplies the at least one pneumatic actuator.

6. A tool setting apparatus according to any preceding claim, comprising a dedicated gas inlet for introducing gas into the at least one gas supply pathway.

7. A tool setting apparatus according to any preceding claim, comprising a check valve in the at least one gas supply pathway.

8. A tool setting apparatus according to claim 7, wherein the check valve comprises a wiper seal.

9. A tool setting apparatus according to claim 7 or claim 8, wherein the check valve provides a pressure relief function thereby releasing an initial high-pressure burst of gas when a pressurised gas supply is received.

10. A tool setting apparatus according to any preceding claim, comprising a base including the measurement probe, wherein the cover is slideably moveable relative to the base between a retracted position that provides the tool measurement configuration and an extended position that provides the protective configuration.

11. A tool setting apparatus according to any preceding claim, wherein the cover comprises a cylindrical portion with a conical nose cone at its distal end, the aperture being provided at the apex of the nose cone.

12. A tool setting apparatus according to any preceding claim in which the tip of the stylus comprises a tool-contacting feature and the aperture is dimensioned to allow the tool-contacting feature to pass therethrough, wherein the tool-contacting feature is located within the aperture in the protective configuration and at least some of the supplied gas is expelled from the cover via a gap between the tool-contacting feature and the periphery of the cover that defines the aperture.

13. A tool setting apparatus according to any preceding claim, wherein the apparatus is configured such that no gas is expelled via the aperture when the apparatus is in the tool measurement configuration.

14. A machine tool incorporating a tool setting apparatus according to any preceding claim, the machine tool having a controller and being interfaced to the tool setting apparatus via one or more control lines, wherein the controller is configured to switch the tool setting apparatus into the protective configuration or the tool measurement configuration via the one or more control lines.

15. A method of operating a tool setting apparatus comprising a measurement probe and a cover, the measurement probe having a stylus and a deflection sensor for sensing deflection of the stylus, the distal end of the stylus comprising a tool-contacting tip, and the cover having an aperture through which the distal end of the stylus can pass, the cover being moveable relative to the measurement probe between a protective configuration in which the cover substantially surrounds the stylus and a tool measurement configuration in which the tool-contacting tip of the stylus protrudes through the aperture of the cover to allow tool measurement, **characterised by** the step of supplying gas into the region enclosed by the cover when the apparatus is in the protective configuration such that gas is expelled from the cover via the aperture.
